Europäisches Patentamt

European Patent Office

Office européen des brevets

(19)

(11) Veröffentlichungsnummer: **0 228 579 B1**

# (12) EUROPÄISCHE PATENTSCHRIFT

(45) Veröffentlichungstag der Patentschrift: **23.10.91**

(51) Int. Cl.⁵: **G06K 11/10**

(21) Anmeldenummer: **86116587.6**

(22) Anmeldetag: **28.11.86**

(54) **Digitalisiertablett sowie Verfahren zu dessen Ansteuerung.**

(30) Priorität: **18.12.85 DE 3544673**
**12.03.86 DE 3608706**

(43) Veröffentlichungstag der Anmeldung:
**15.07.87 Patentblatt 87/29**

(45) Bekanntmachung des Hinweises auf die
Patenterteilung:
**23.10.91 Patentblatt 91/43**

(84) Benannte Vertragsstaaten:
**AT BE CH DE ES FR GB GR IT LI LU NL SE**

(56) Entgegenhaltungen:
**US-A- 3 999 012**
**US-A- 4 054 746**

(73) Patentinhaber: **Aristo Graphic Systeme GmbH
& Co KG
Schnackenburgallee 41
W-2000 Hamburg 50(DE)**

(72) Erfinder: **Roermersma, Henk
Brahmsstrasse 31
W-2200 Elmshorn(DE)**
Erfinder: **Falkenberg, Rolf
Lindenhof 31
W-2083 Halstenbek(DE)**
Erfinder: **Ellermann, Dieter
Bahrenfelderstrasse 132
W-2000 Hamburg 50(DE)**

**Beschreibung**

Die Erfindung bezieht sich auf ein Digitalisiertablett mit einer ersten, sich in einer Ebene parallel zur Arbeitsfläche erstreckenden Gitterwicklung, deren Leiterbahnen sich senkrecht zu einer ersten Koordinatenachse erstrecken und die in sich regelmäßig wiederholende Leiterbahngruppen unterteilt ist, in denen die Leiterbahnen jeweils mit vorgegebenem Abstand parallel zueinander verlaufen, mit einer sich in einer Ebene parallel zur Arbeitsfläche erstreckenden, der ersten Gitterwicklung eng benachbarten zweiten Gitterwicklung, deren Leiterbahnen sich senkrecht zu einer zweiten Korrdinatenachse erstrecken und die in sich regelmäßig wiederholende Leiterbahngruppen unterteilt ist, in denen die Leiterbahnen jeweils mit vorgegebenem Abstand parallel zueinander verlaufen, sowie mit dritten und vierten Gitterwicklungen, die jeweils parallel zur ersten und zweiten Gitterwicklung angeordnet sind, wobei alle Gitterwicklungen in parallelen Ebenen zueinander liegen.

Bei einem bekannten Digitalisiertablett dieser Art (US-PS 4054746) sind die rechtwinkelig zueinander verlaufenden ersten und zweiten Gitterwicklungen jeweils in Leiterbahngruppen unterteilt, von denen jede Gruppe beispielsweise 5 Leiterbahnen enthält, die mit zeitlich versetzten bzw. phasenverschobenen Stromimpulsen beaufschlagt werden, so daß ein durch die Leiterbahngruppen wanderndes Magnetfeld entsteht. Wird auf eine Leiterbahngruppe eine Abtastspule gelegt, so wird in ihr entsprechend den Änderungen des Magnetfeldes eine Spannung induziert, die nach Durchlaufen eines Tiefpaßfilters Sinusform hat. Diese Spannung ist am größten, wenn die unterhalb der Wicklung der Abtastspule verlaufende Leiterbahn eine maximale Magnetfeldänderung erzeugt. Die induzierte Spannung hat dagegen ein Minimum, wenn die mittig unterhalb der Abtastspule liegende Leiterbahn eine maximale Magnetfeldänderung erzeugt. Dadurch ergibt sich ein Spannungsverlauf, wie er in Figur 7 der US-PS 4054746 dargestellt ist.

Aus dem zeitlichen Abstand des Nulldurchganges des Erregerstromes durch die erste Leiterbahn der Leiterbahngruppen und dem Nulldurchgang des Stromes in der Erregerspule läßt sich bekannterweise die Lage einer Mittelachse der Erregerspule innerhalb der Leiterbahngruppe ermitteln, so daß bei aufeinanderfolgender Durchführung des vorstehend erläuterten Verfahrens für die erste und zweite Gitterwicklung die Lage der Abtastspule innerhalb einer Leiterbahngruppe der ersten und einer Leiterbahngruppe der zweiten Gitterwicklung bekannt ist, jedoch die Leiterbahngruppen jeweils noch nicht festgestellt sind. Zu diesem Zweck wird bei dem bekannten Digitalisiertablett jeder Leiterbahngruppe der ersten und zweiten Gitterwicklung eine parallel zu den Leiterbahnen der Gruppe verlaufende Leiterbahn einer dritten und einer vierten Gitterwicklung zugeordnet. Werden die Leiterbahnen der dritten Gitterwicklung einzeln nacheinander mit Stromimpulsen beaufschlagt, so läßt sich aus dem Zeitpunkt der Erregung der Abtastspule durch einen Stromimpuls in einer Leiterbahn der dritten Gitterwicklung ermitteln, über welcher Leiterbahngruppe der ersten Gitterwicklung die Abtastspule liegt. Entsprechend kann mittels der Leiterbahnen der vierten Gitterwicklung die Leiterbahngruppe der zweiten Gitterwicklung bestimmt werden, über der sich die Abtastspule befindet.

Es ist bekannt, daß derartige Digitalisiertabletts nicht nur durch Erregung der Gitterwicklungen und Abtastung mittels Abtastspulen, sondern auch durch Induzierung von Spannungen in den Gitterwicklungen durch Beaufschlagung der Abtastspule mit Strom betrieben werden können (vgl. beispielsweise CAD-CAM-REPORT Nr. 3, 1985).

Ein Nachteil der vorstehend beschriebenen Digitalisiertabletts besteht darin, daß die Leiterbahnen der dritten und vierten Gitterwicklungen, also die Leiterbahnen, die für die sogenannte Grob-Messung verwendet werden, im wesentlichen einzeln angesteuert werden müssen, daß also über einen Randbereich des Digitalisiertabletts in jeder der beiden Koordinatenrichtungen elektrische Bauelemente, etwa Dioden, verteilt sein müssen, über die die aufeinanderfolgenden, einzelnen Ansteuerungen der Leiterbahnen der dritten und vierten Gitterwicklungen stattfinden.

Ferner wird bei dem bekannten Digitalisiertablett für die sogenannte Fein-Messung mittels der ersten und zweiten Gitterwicklungen zwar eine verhältnismäßig schmale Bandbreite benötigt, jedoch erfordert die zusätzliche Grob-Messung eine große Bandbreite der Auswerteschaltung. Eine große Bandbreite führt jedoch zu einem geringen Störabstand und dadurch zu einem erhöhten Bauelementenaufwand.

Es ist Aufgabe der Erfindung, ein Digitalisiertablett zu schaffen, bei dem die Ansteuer- und Auswerteanordnung für die Gitterwicklungen nicht an die Form und Abmessungen des Digitalisiertabletts angepaßt sein müssen, die Anzahl der Anschlüsse verringert wird und ein größerer Störabstand der Signale erreicht wird.

Außerdem soll die Anpassung des Digitalisiertabletts an unterschiedliche Computerschnittstellen leichter als beim Stand der Technik und ohne mechanisches Setzen von Anpassungsschaltern durchführbar sein.

Zur Lösung dieser Aufgabe wird ein Digitalisiertablett der eingangs erwähnten Art erfindungsgemäß derart ausgestaltet, daß die dritten und vierten Gitterwicklungen jeweils in Leiterbahngruppen unterteilt sind, die jeweils eine den Leiterbahngruppen der ersten und zweiten Gitterwicklungen analoge Struktur aufweisen, und daß die Breiten der Leiterbahngruppen der ersten und der dritten Gitterwicklungen sowie die Breiten der Leiterbahngruppen der zweiten und der vierten Gitterwicklungen sich jeweils derart voneinander unterscheiden, daß die ersten Leiterbahnen der benachbarten Leiterbahngruppen der beiden parallel zueinander angeordneten Gitterwicklungen in Richtung der zugehörigen Koordinatenachse über die gesamte Arbeitsfläche unterschiedliche Abstände voneinander haben.

Bei dem erfindungsgemäßen Digitalisiertablett unterscheiden sich also die Breiten der Leiterbahngruppen der sich jeweils in Richtung einer Koordinatenachse erstreckenden Gitterwicklungen, d. h. der ersten und der dritten Gitterwicklungen sowie der zweiten und der vierten Gitterwicklungen von Leiterbahngruppe zu Leiterbahngruppe, und sie können auch von Leiterbahn zu Leiterbahn unterschiedlich sein. Werden daher beispielsweise die erste und die dritte Leiterbahngruppe zeitlich aufeinanderfolgend mit gleichartigen Gruppen von Stromimpulsen beaufschlagt, so erzeugt jede dieser Impulsgruppen, also die Impulsgruppe in der ersten Gitterwicklung und die Impulsgruppe in der dritten Gitterwicklung, in einer Abtastspule Spannungsimpulse, aus denen mittels eines Tiefpaßfilters jeweils ein sinusförmiger Spannungsverlauf gewonnen wird. Der Abstand der Nulldurchgänge der beiden sinusförmigen Spannungsverläufe ist ein Maß für den Abstand der beiden mit der Abtastspule gekoppelten Leiterbahngruppen der ersten und der dritten Gitterwicklung. Da aber, wie vorstehend bereits erwähnt, der Abstand benachbarter Leiterbahngruppen der ersten und dritten Gitterwicklungen über die gesamte Arbeitsfläche unterschiedlich ist, ergibt sich aus dem ermittelten Abstand auch die Lage der Leiterbahngruppe aus der ersten Gitterwicklung, mit der, wie üblich die Feinmessung durchgeführt wird.

Somit kann bei dem erfindungsgemäßen Digitalisiertablett zur Grob- und Fein-Messung im wesentlichen die gleiche Ansteuer- und Auswerteschaltung verwendet werden, und die Ansteuerung kann an den Enden der Gitterwicklungen vorgenommen werden, die in konzentrierter Weise in einem schmalen Randbereich des Digitalisiertabletts zusammengefaßt werden können, da nicht mehr, wie bei dem bekannten Digitalisiertablett, eine gesonderte Ansteuerung einzelner Leiterbahnen erforderlich ist. Auf diese Weise sind also die Ansteuer- und Auswerteschaltungen vollständig unabhängig von den Abmessungen des Digitalisiertabletts, und bei gegenüber dem bekannten Digitalisiertablett gleicher Abmessung wird eine größere Arbeitsfläche erhalten, da auf den Rand des Digitalisiertabletts keine elektrischen Bauelemente aufgesetzt zu werden brauchen.

Ferner wird durch die Beaufschlagung sowohl der Gitterwicklung für die Fein-Messung als auch der Gitterwicklung für die Grob-Messung mit gleichartigen Impulsen die gleiche schmale Bandbreite für den gesamten Ansteuer- und Auswertebetrieb erreicht, wie sie bei der Benutzung des bekannten Digitalisiertabletts nur für die Fein-Messung zu erreichen war. Dadurch ergibt sich im Betrieb des erfindungsgemäßen Digitalisiertabletts ein großer Störabstand und damit eine Verringerung des Bauelementenaufwandes. Infolgedessen kann auch die Energie der einzuspeisenden Impulse verringert und/oder die Störfestigkeit erhöht werden.

In einer bevorzugten Ausgestaltung der Erfindung sind die Breiten aller Leiterbahngruppen einer Gitterwicklung im wesentlichen gleich, wodurch die Auswertung der Signale vereinfacht wird.

Es sei erwähnt, daß die Positionen der Leiterbahnen der dritten und vierten Gitterwicklungen geringfügig von den idealen Positionen abweichen können, da diese Gitterwicklungen nur zur Grob-Messung verwendet werden, also lediglich zur Bestimmung der jeweiligen Leiterbahngruppe der ersten oder der zweiten Gitterwicklung, in der die Fein-Messung stattfindet. Geringe Abweichungen von Leiterbahnen der für die Grob-Messung verwendeten Gitterwicklung führen nicht zu Meßfehlern, solange die Abweichungen nur so gering sind, daß sich die jeweiligen Leiterbahngruppe der für die Fein-Messung verwendete Gitterwicklung noch ermitteln läßt.

Um eine kontinuierliche Änderung der Abstände zwischen benachbarten Leiterbahngruppen der ersten und der dritten Gitterwicklung sowie der zweiten und vierten Gitterwicklung zu erreichen, kann die erste Gitterwicklung über die gesamte Arbeitsfläche n, die zweite Gitterwicklung über die gesamte Arbeitsfläche m, die dritte Gitterwicklung über die gesamte Arbeitsfläche $(n - r)$ und die vierte Gitterwicklung über die gesamte Arbeitsfläche $(m - q)$ Leiterbahngruppen aufweisen, wobei n und m Zahlen größer 1 vorzugsweise ganz Zahlen sind und r und q Zahlen kleiner 1, jedoch selbstverständlich größer als 0 sind. Vorzugsweise ist dann der Abstand des Anfangs der Leiterbahngruppen der ersten und der dritten Gitterwicklungen sowie der zweiten und der vierten Gitterwicklungen an einem Ende der Arbeitsfläche gleich 0, so daß dieser Abstand kontinuierlich zum gegenüberliegende Ende der Arbeitsfläche zunimmt.

Um einen besonders kompakten Aufbau des Digitalisiertabletts zu erreichen, können die ersten und die dritten Gitterwicklungen sowie die zweiten und die vierten Gitterwicklungen im Bereich der Arbeitsfläche jeweils in einer gemeinsamen Ebene liegen. Außerhalb der Arbeitsfläche können die Leiterbahnen der dritten Gitterwicklung in den Umkehrbereichen der Leiterbahnen der ersten Gitterwicklung sowie die Leiterbahnen der vierten Gitterwicklung in den Umkehrbereichen der Leiterbahnen der zweiten Gitterwicklung außerhalb dieser Ebene verlaufen.

Bei einem solchen Aufbau kann es vorkommen, daß bei richtiger Positionierung Leiterbahnen der ersten und der dritten Gitterwicklung bzw. Leiterbahnen der zweiten und der vierten Gitterwicklung genau überdeckend angeordnet werden müßten, was einen Kurzschluß zur Folge hätte. Statt in einem solchen Fall die entsprechende Leiterbahn der dritten bzw. die entsprechende Leiterbahn der vierten Gitterwicklung etwas seitlich zu verlagern und somit eine Ungenauigkeit in der Grobmessung zu erhalten, kann die entsprechende Leiterbahn der dritten Gitterwicklung bzw. die entsprechende Leiterbahn der vierten Gitterwicklung in zwei Teil-Leiterbahnen unterteilt sein, die zu beiden Seiten der entsprechenden Leiterbahn der ersten Gitterwicklung bzw. der entsprechenden Leiterbahn der zweiten Gitterwicklung und parallel zu dieser verlaufen. Auf diese Weise wird der Strom durch die Leiterbahn der dritten bzw. der vierten Gitterwicklung in zwei Teilströme aufgeteilt, die jedoch ein induzierendes Magnetfeld erzeugen, das identisch mit demjenigen ist, das durch die richtig positionierte Leiterbahn der dritten bzw. der vierten Gitterwicklung entstehen würde.

Die Erfindung betrifft außerdem ein Digitalisiertablett, welches sich dadurch auszeichnet, daß ein erstes Arbeitsfeld auf der Vorderseite des Digitalisiertabletts und ein zweites Arbeitsfeld auf dessen Rückseite definiert ist, und daß eine Auswertungsschaltung aufgrund der Phasenverschiebung der in den Leiterbahnen laufenden Impulse zu entscheiden vermag, ob eine Abtastspule über dem ersten Arbeitsfeld bzw. der Vorderseite oder über dem zweiten Arbeitsfeld bzw. der Rückseite des Digitalisiertabletts liegt.

Die Erfindung betrifft ferner ein Verfahren zum Ansteuern eines erfindungsgemäßen Digitalisiertabletts, bei dem die ersten und zweiten Gitternwicklungen mit periodischen elektrischen Signalen insbesondere digitalen Impulsfolgen angesteuert werden, die in vorgegebenem Abstand zeitlich versetzt sind, wobei erfindungsgemäß, wie vorstehend erläutert, die dritte und die vierte Gitterwicklung mit im vorgegebenen Abstand seitlich zueinander sowie in vorgegebenem Abstand zeitlich zu den Signalen für die erste und zweite Gitterwicklung versetzten Signalen angesteuert werden.

Die Erfindung wird im folgenden anhand der Figuren näher erläutert:

Figur 1     zeigt ein Digitalisiertablett mit Ansteuer- und Auswerteschaltungen in Form eines Blockschaltbildes.

Figur 2     zeigt schematisch den Aufbau des Digitalisiertabletts aus Figur 1 sowie die zugehörigen Ansteuer- und Auswerteeinrichtungen.

Figur 3     zeigt den Verlauf und die Anleitung der Leiterbahnen einer Gitterwicklung für die Fein-Messung sowie den Verlauf und die Anordnung der Leiterbahnen einer zugehörigen Gitterwicklung für die Grob-Messung.

Figur 4     zeigt im oberen Teil die Ansteuersignale für eine Gitterwicklung für die Fein-Messung und die zugehörige Gitterwicklung für die Grob-Messung und im unteren Teil die in der Abtastspule induzierten Spannungsimpulse sowie die aus ihnen erhaltenen sinusförmigen Signale.

Figur 5     zeigt schematisch die Verbindung der Leiterbahnen zweier in einer gemeinsamen Ebene liegenden Gitterwicklungen außerhalb der Arbeitsfläche

Figur 6     zeigt parallel verlaufende Leiterbahnen einer Gitterwicklung für die Fein-Messung und einer Gitterwicklung für die Grob-Messung, wobei einzelne Leiterbahnen der beiden Gitterwicklungen einander im wesentlichen überdeckend verlaufen.

Figur 7     zeigt eine Anordnung ähnlich Figur 6, bei der die Leiterbahnen der Gitterwicklung für die Grob-Messung im Überdeckungsbereich in zwei parallele zu beiden Seiten der zugehörigen Leiterbahn der Gitterwicklung für die Fein-Messung verlaufende Teil-Leiterbahnen unterteilt sind.

Figur 8     zeigt ein Ausführungsbeispiel in der Draufsicht

Figur 9     zeigt das Ausführungsbeispiel aus Figur 8 von unten gesehen.

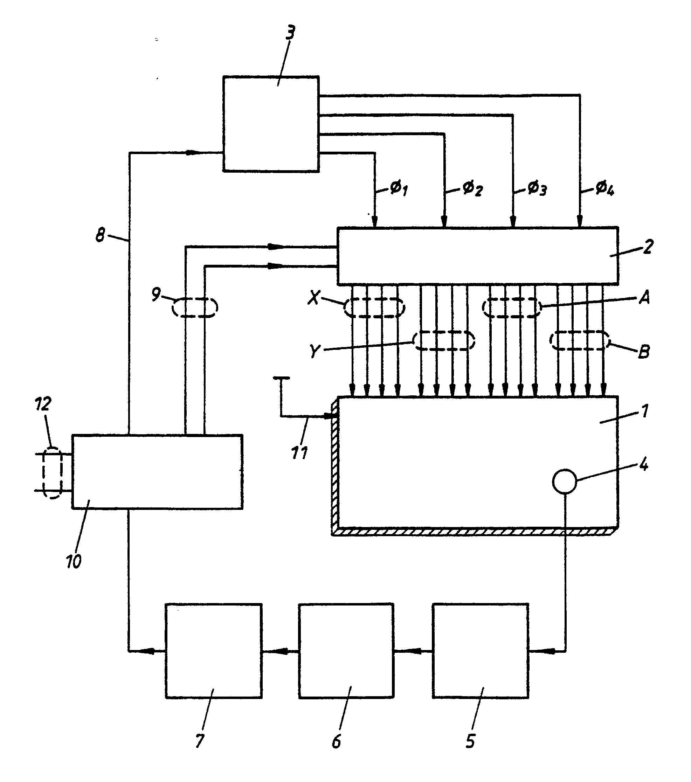

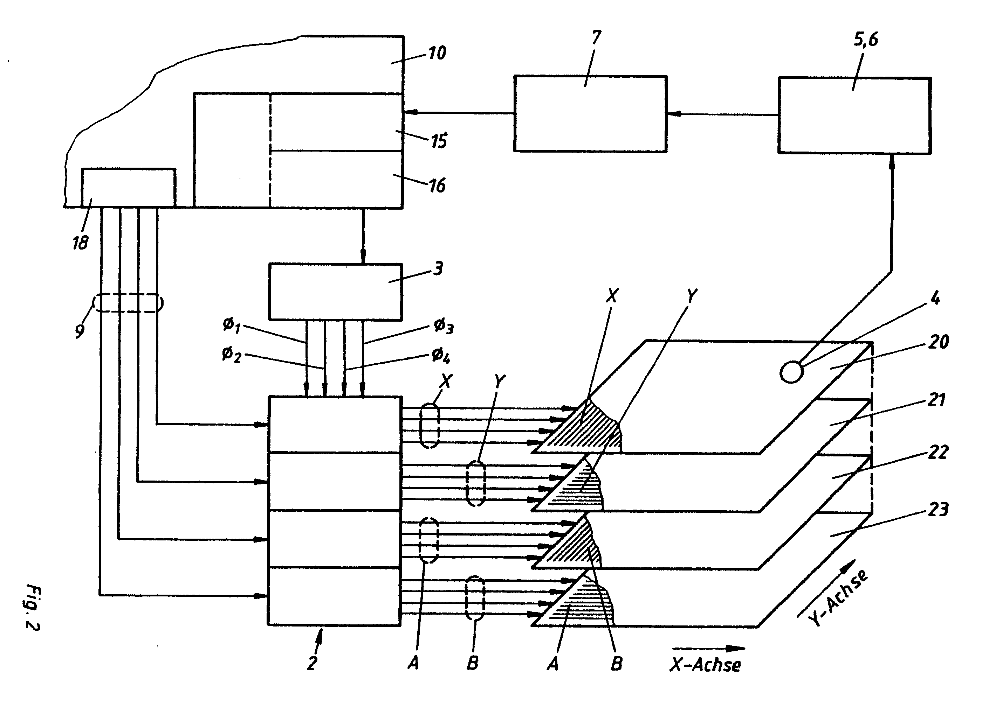

Die in Figur 1 gezeigte Anordnung enthält ein Digitalisiertablett mit vier Gitterwicklungen (X, Y, A, B). Jede dieser Gitterwicklungen enthält, wie später erläutert werden wird, Leiterbahngruppen aus jeweils vier Leiterbahnen, die von einer Treiberstufe (2) angesteuert werden. Der Treiberstufe (2) werden von vier I/O-Ports (18 in Figur 2) eines Mikroprozessors (10), in diesem Fall ein Controller der Firma Motorola aus der Reihe MC 6801, über eine Phasenschieberschaltung (3) über vier Leitungen vier um 45° phasenverschobene Rechteckimpulse $\Phi_1, \Phi_2, \Phi_3, \Phi_4$ zugeführt, die alle eine Länge von 180° haben. Nach dem Durchtritt durch die Leiterbahnen der zugehörigen Gitterwicklungen werden die Impulse, wie in Figur 1 schematisch angedeutet, über Leitungen (11) abgeführt, etwa nach Masse.

Auf der Arbeitsfläche, also der oberen oder der unteren Fläche des Digitalisiertabletts (1) liegt eine Abtastspule (4) von üblicher Bauart, in der entsprechend den Stromflüssen in den Gitterwicklungen Spannungen induziert werden. Diese werden über einen Verstärker (5), einem Tiefpaßfilter (6) zugeleitet, an den ein Nulldurchgangsdetektor (7) angeschlossen ist, dessen Ausgangssignal dem Mikroprozessor (10) zugeführt wird. Verstärker (5), Tiefpaßfilter (6) und Nulldurchgangsdetektor (7) sind aus sechs Operationsverstärkern gebildet, wobei der Nulldurchgangsdetektor (7) aus einem als Komparator geschalteten Verstärker besteht. Die Funktionsweise der gesamten Anordnung wird später erläutert werden.

Wie Figur 2 zeigt, verlaufen die Leiterbahnen der Gitterwicklung (X) senkrecht zur X-Achse und die Leiterbahnen der Gitterwicklung (Y) senkrecht zur Y-Achse. Die Gitterwickung (X), die in der Ebene (20) liegt, ermöglicht somit in bekannter Weise die Ermittlung der Lage eines Punktes bzw. der X-Achse, während die Gitterwicklung (Y), die in der Ebene (21) liegt, die Ermittlung der Lage eines Punktes in Richtung Y-Achse gestattet. Die Leiterbahnen der Gitterwicklung (A) liegen in der Ebene (22) und verlaufen parallel zu den Leiterbahnen der Gitterwicklung (X), während die Leiterbahnen der Gitterwicklung (B) in der Ebene (23) parallel zu den Leiterbahnen der Gitterwicklung (Y) verlaufen. Die parallelen Ebenen (20, 21, 22 und 23) wurden lediglich zur Verdeutlichung im großen Abstand voneinander dargestellt. Normalerweise liegen sie eng benachbart und die verschiedenen Gitterwicklungen sind lediglich durch dünne Isolierstoffschichten voneinander getrennt.

Wie angedeutet, erfolgt die Ansteuerung der einzelnen Gitterwicklungen durch ihnen zugehörige Abschnitte der Treiberstufe (2), die beispielsweise aus 4 IC's mit Quad-NAND-Gattern besteht. Die einzelnen Abschnitte werden über Leitungen (9) vom Ausgang (18) des Mikroprozessors (10) in der richtigen zeitlichen Reihenfolge angesteuert, um den Gitterwicklungen in zeitlich richtiger Zuordnung die Impulse $\Phi_1, \Phi_2, \Phi_3, \Phi_4$ zuzuleiten.

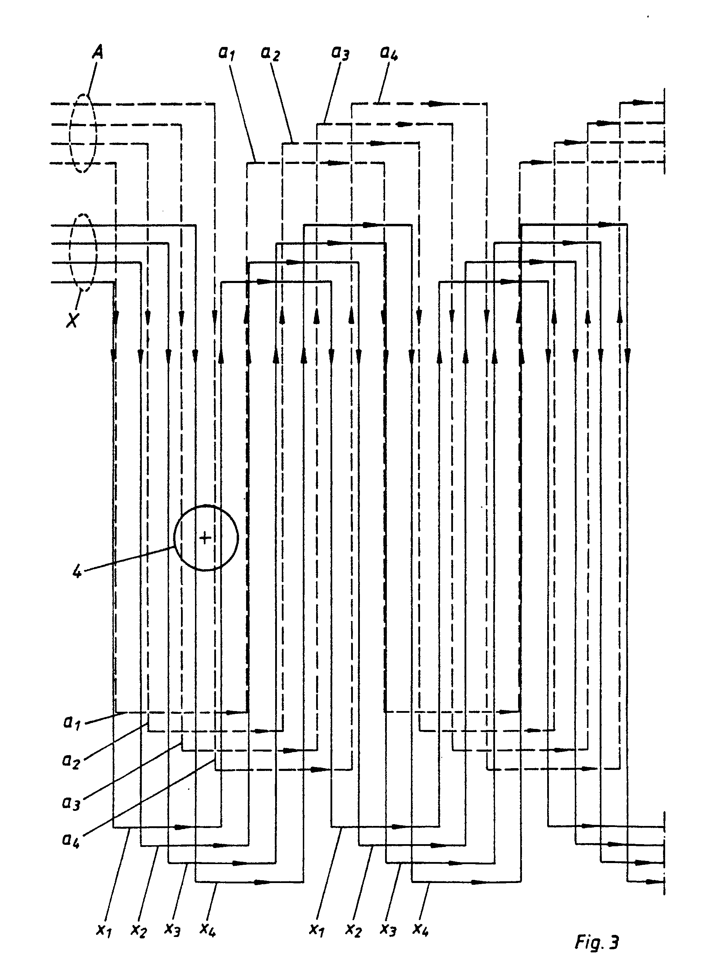

Der Verlauf der Leiterbahnen der Gitterwicklung (X) und (A) ist schematisch und etwas vereinfacht in Figur 3 dargestellt. Wie zu erkennen ist, haben die Leiterbahnen ($x_1, x_2, x_3, x_4$) der Gitterwicklung (X) alle gleichen Abstand, d. h. der Abstand der Leiterbahnen innerhalb einer Leiterbahngruppe aus diesen Leiterbahnen ist konstant. Im dargestellten Ausführungsbeispiel ist auch der Abstand der letzten Leiterbahn einer Gruppe von der ersten Leiterbahn der folgenden Gruppe konstant. Dabei unterscheiden sich benachbarte Leiterbahngruppen elektrisch dadurch, daß sie die eingespeisten Ströme in entgegengesetzten Richtungen leiten, wie dies durch die Pfeile in Figur 3 angedeutet ist.

Es sei erwähnt, daß in Figur 3 nur der im Bereich der angedeuteten Anschlüsse zur Verbindung mit der Treiberschaltung (2) liegende Beginn von Leiterbahnen gezeigt ist, die sich über die gesamte, in Richtung der X-Achse verlaufende Breite des Digitalisiertabletts (1) erstrecken und die, wie üblich, am Ende umgekehrt werden und die dargestellten Leiterbahnen überlagernd zur Einspeiseseite zurückgeführt werden.

Ferner ist in Figur 3 der entsprechende Teil der Gitterwicklung (A) gezeigt, die Leiterbahngruppen mit jeweils 4 Leiterbahnen ($a_1, a_2, a_3, a_4$) aufweisen. Die Leiterbahnen einer Leiterbahngruppe haben gleichen Abstand voneinander und auch der Abstand zwischen der letzten Leiterbahn ($a_4$) Gruppe einer Gruppe und der ersten Leiterbahn ($a_1$) der nachfolgenden Gruppe ist gleich. Die Leiterbahnen der Gitterwicklung (A) sind gestrichelt dargestellt.

Wie zu erkennen ist, ist der Abstand zwischen benachbarten Leiterbahnen der Gitterwicklung (X) deutlich kleiner als der Abstand zwischen benachbarten Leiterbahnen der Gitterwicklung (A), d.h. das Digitalisiertablett enthält in diesem Fall eine größere Anzahl von Leiterbahnenbzw. Leiterbahngruppen der Gitterwicklung (X) als von Leiterbahnen bzw. Leiterbahngruppen der Gitterwicklung (A). Die Anzahl der Leiterbahngruppen der Gitterwicklung (X) beträgt n und die Anzahl der Leiterbahngruppen der Gitterwicklung (A) (n - r), wobei n eine ganze Zahl und r größer Null, jedoch kleiner oder gleich eins ist. Auf diese Weise wird erreicht, daß, gezählt von der ersten, mit der Einspeisung verbundenen Leiterbahngruppe jeder der beiden Gitterbahnwicklungen (X) und (A) die Leiterbahnen gleich numerierter Gruppen der beiden Gitterwicklungen (X) und (A) immer einen unterschiedlichen räumlichen Abstand voneinander haben. Wie Figur 3 zu entnehmen ist, ist beispielsweise der Abstand der Leiterbahn ($a_2$) der ersten mit der Einspeisung verbundenen Leiterbahngruppe der Gitterwicklung (A) von der Leiterbahn ($x_2$) der ersten, mit der Einspeisung verbundenen Leiterbahngruppe der Gitterwicklung (X) deutlich kleiner als der Abstand der Leiterbahn ($a_2$) der folgenden Leiterbahngruppe der Gitterwicklung (A) von der Leiterbahn ($x_2$) der folgenden Leiterbahngruppe der Gitterwicklung (X). Ferner zeigt Figur 3, daß dieser Abstand in den folgenden also den in Figur 3 weiter rechts liegenden Leiterbahngruppen immer mehr zunimmt.

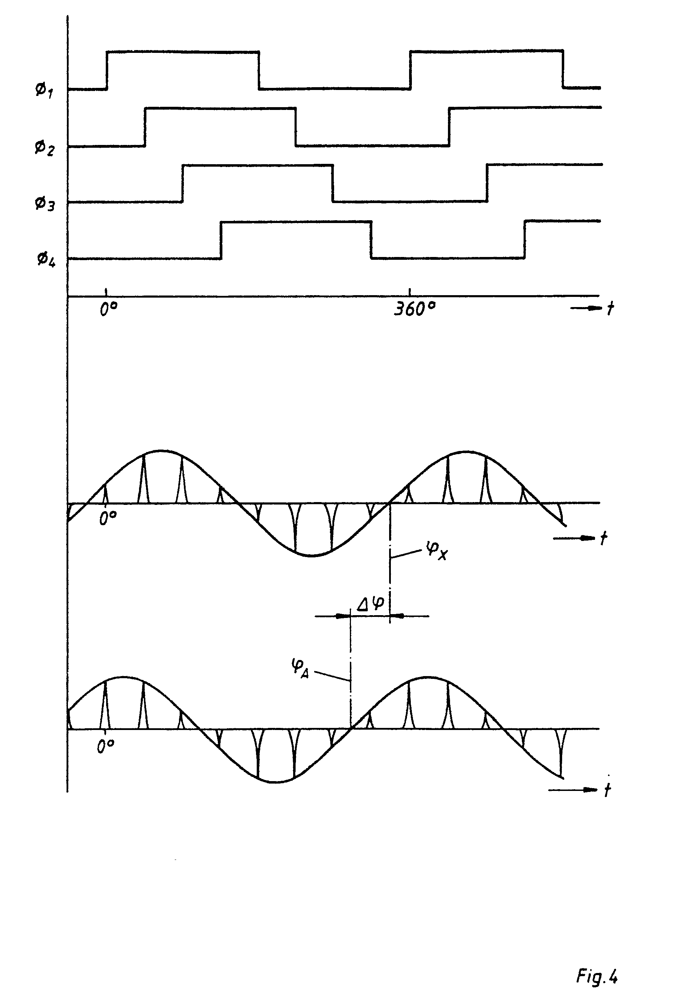

Den Leiterbahnen der Gitterwicklung (X) und der Gitterwicklung (A) werden zur Durchführung einer Messung aufeinanderfolgend periodisch phasenverschobene Rechteck impulse zugeführt, die im oberen Teil von Figur 4 angedeutet sind. Diese Rechteck impulse haben, wie zu erkennen ist, eine

Länge von 180°, so daß zunächst 4 aufeinanderfolgende, um 45° zueinander phasenverschobene ansteigende Impulsflanken und 45° nach der letzten ansteigenden Impulsflanke vier jeweils um 45° zueinander phasenverschobene, abfallende Impulsflanken entstehen, worauf dann nach 45° wieder vier jeweils um 45° phasenverschobene, ansteigende Impulsflanken auftreten.

Die Impulse $\Phi_1$ werden von der Treiberstufe (2) zunächst der Leiterbahn ($x_1$) der Gitterwicklung (X), die Impulse $\Phi_2$ der Leiterbahn ($x_2$) der Gitterwicklung (X), die Impulse $\Phi_3$ der Leiterbahn ($x_3$) der Gitterwicklung (X) und die Impulse $\Phi_4$ der Leiterbahn ($x_4$) der Gitterwicklung (X) zugeführt.

Auf diese Weise durchläuft also die Leiterbahnen der Gitterwicklungen (X) eine periodische Impulsfolge, wie sie im oberen Teil der Figur 4 angedeutet ist. Dies hat zur Folge, daß in der in Figur 3 angedeuteten Abtastspule (4), deren Mittelpunkt zwischen der Leiterbahn ($x_4$) der ersten Leiterbahngruppe der Gitterwicklung (X) und ($a_4$) der Leiterbahngruppe der Gitterwicklung (A) liegt, periodisch Spannungsimpulse induziert werden, die eine Folge der ansteigenden und abfallenden Impulsflanken der Impulse $\Phi_1$ bis $\Phi_4$ sind. Die Impulse, die durch die Gitterwicklung induziert werden, sind in Figur 4 im mittleren Diagramm gezeigt, wobei auch die Zuordnung zu den erzeugenden Impulsen $\Phi_1$, bis $\Phi_4$ zu erkennen ist, die darüber dargestellt sind. Werden daher diese Impulse den Leiterbahnen ($x_1$ bis $x_4$) zugeführt, so werden entsprechende Spannungsimpulse in der in Figur 3 angedeuteten Abtastspule (4) induziert. Wie vorstehend bereits erläutert, ergibt sich ein minimaler Spannungsimpuls dann, wenn eine unter der Mitte der Spule (4) hindurchlaufende Leiterbahn mit Strom beaufschlagt wird und ein maximaler Spannungsimpuls, wenn eine unter dem Randbereich der Spule hindurchlaufende Leiterbahn mit Strom beaufschlagt wird. Daher zeigt eine Betrachtung von Figur 3, daß eine Beaufschlagung der Leitung ($x_4$) der ersten Leiterbahngruppe und eine Beaufschlagung der Leitung ($x_1$) der zweiten Leiterbahngruppe der Gitterwicklung (X) zur Erzeugung eines kleinen Spannungsimpulses führt, wobei sich bei Stromrichtungen entsprechend den Pfeilen durch die Leiterbahn ($x_4$) der ersten Leiterbahngruppe ein negativer Impuls und durch die Leiterbahn ($x_1$) der zweiten Leiterbahngruppe ein positiver Impuls ergibt. Zwischen diesen beiden Impulsen muß daher ein Nulldurchgang der Spannung vorliegen, der im mittleren Diagramm von Figur 4 bei $\phi_x$ liegt. Bei einer Verschiebung der Impulse um 180°, also bei in den erwähnten Leiterbahnen umgekehrter Stromrichtung ergeben sich weitere Nulldurchgänge, die jeweils um 180° verschoben sind. Die zwischen diesen Nulldurchgängen erzeugten Impulse entstehen durch die übrigen Teile der Impulsfolge aus dem oberen Teil von Figur 4. Im übrigen wird zur weiteren Erläuterung der Entstehung der Impulsfolgen auf die US-PS 4054746, insbesondere Figuren 1 bis 3 mit zugehöriger Beschreibung verwiesen.

Werden die so entstehenden Spannungsimpulse über den Verstärker (5) aus Figur 1 dem Tiefpaßfilter (6) zugeführt, so ergibt sich die im mittleren Teil von Figur 4 angedeutete sinusförmige Höhkurve, deren zeitliche Nulldurchgänge vom Nulldurchgangs-Detektor (7) ermittelt und im Mikroprozessor (10) weitergeleitet werden. Aus der Lage bzw. dem Zeitpunkt des Nulldurchganges ergibt sich in bekannter Weise die Position des Mittelpunktes der Abtastspule (4) innerhalb der Leiterbahngruppe in Richtung der X-Achse.

Danach werden der Gitterwicklung (A) in entsprechender Weise von der Treiberstufe (2) Impulse $\Phi_1,\Phi_2,\Phi_3,\Phi_4$ gemäß oberem Diagramm aus Figur 4 zugeführt. Bezüglich der Gitterwicklung (A) liegt die Abtastspule (4) gemäß Figur 3 nahezu mittig über der Leiterbahn ($a_4$) der ersten Leiterbahngruppe, so daß eine Änderung des Stromflusses in dieser Leiterbahn einen minimalen Spannungsimpuls verursacht, der Nulldurchgang also benachbart dazu liegt, d. h. der Nulldurchgang liegt bei $\phi_A$ im unteren Diagramm von Figur 4.

Die durch Beaufschlagung der Gitterwicklung (A) in der Abtastspule (4) erzeugten Spannungsimpulse werden wiederum über den Verstärker (5) (Figur 1) dem Tiefpaßfilter (6) zugeleitet, so daß der im unteren Diagramm von Figur 4 angedeutete, sinusförmige Spannungsverlauf entsteht.

Im Nulldurchgangs-Detektor (7) werden die Nulldurchgänge des sinusförmigen Spannungsverlaufs erkannt und dem Mikroprozessor (10) zugeführt.

Wie Figur 4 zeigt, ergibt sich zwischen den einander entsprechenden Nulldurchgängen der sinusförmigen Spannungsverläufe in Folge der Beaufschlagung der Gitterwicklung (X) und in Folge der Beaufschlagung der Gitterwicklung (A) ein zeitlicher Abstand, der mit $\Delta\Phi$ bezeichnet ist. Dieser zeitliche Abstand hängt, wie ohne weiteres klar ist, vom Abstand der Leiterbahnen der Gitterwicklungen (X) und (A) im Bereich der Auflage der Abtastspule (4) ab, d. h. er ist um so größer, je größer dieser Abstand ist. Da der Abstand der Leiterbahnen der Gitterwicklung (A) von den Leiterbahnen der Gitterwicklung (X) über die Arbeitsfläche des Digitalisiertabletts kontinuierlich zunimmt (Figur 3), ergibt sich aus dem gemessenen Abstand diejenige Leiterbahngruppe, in der die Fein-Messung, d. h. die Messung auf der Gitterwicklung (X) stattgefunden hat.

Die Messung zur Ermittlung der Position der Abtastspule in Richtung Y-Achse (Figur 2) erfolgt dann in entsprechender Weise durch Beaufschlagung der Gitterwicklung (Y) und der Gitterwicklung (B) (mit den Leiterbahnen $b_1$, $b_2$, $b_3$, $b_4$).

Die im Mikroprozessor (10) aus den beiden Fein-Messungen und den beiden Grob-Messungen ermittelten Koordinaten der Lage des Mittelpunktes der Abtastspule (4) können über Leitungen (12) (Figur 1) einem übergeordneten System o. ä. zugeführt werden.

Es sei erwähnt, daß bei Durchführung von Messungen mit sich bewegende Abtastspule geringfügige Fehler auftreten können, weil sich die Abtastspule (4) zwischen den einzelnen Messungen bereits verlagert hat. Um diesen Fehler zu kompensieren, kann im Mikroprozessor eine arithmetische Mittelwertbildung zwischen aufeinanderfolgenden Messungen stattfinden, durch die eine ausreichende Genauigkeit erzielt wird.

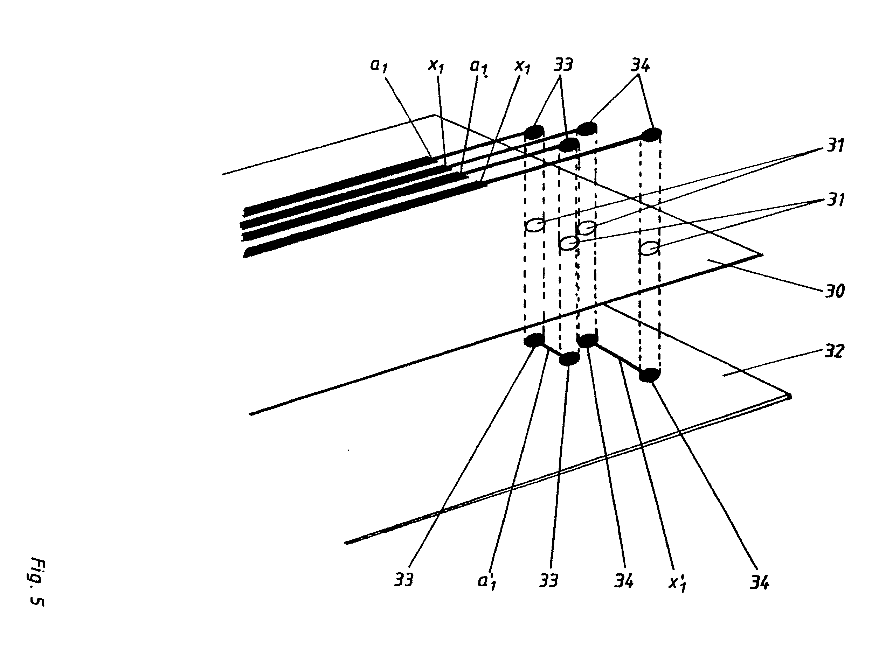

Wie in Figur 2 dargestellt, können die Gitterwicklungen (X) und (Y) für die Fein-Messungen und die Gitterwicklungen (A) und (B) für die Grob-Messungen jeweils auf einer Leiterplatte (20, 21, 22, 23) angeordnet sein und so in unterschiedlichen Ebenen liegen. Um eine kompakteren Aufbau des Digitalisiertabletts zu erreichen, ist es jedoch auch möglich, die zusammengehörenden Gitterwicklungen für die Fein-Messung und die Grob-Messung, also einerseits die Gitterwicklungen (X) und (A) und andererseits die Gitterwicklungen (Y) und (B) in einer gemeinsamen Ebene anzuordnen. Eine derartige Anordnung ist schematisch in auseinander gezogener Teildarstellung in Figur 5 gezeigt, wo die parallel verlaufenden Leiterbahnen ($x_1$) der Gitterwicklung (X) für die Fein-Messung und die Leiterbahn ($a_1$) der Gitterwicklung (A) für die Grob-Messung in einer Ebene dargestellt. Die Gitterwicklungen sind in einer gemeinsamen Ebene auf der Leiterplatte (30) ausgebildet. Die breiter dargestellten Abschnitte der Leiterbahnen liegen im Bereich der Arbeitsfläche des Digitalisiertabletts, also in demjenigen Bereich, in dem eine Abtastung mittels der Abtastspule vorgenommen wird. Die Leiterbahnen sind jedoch mit schmaleren Abschnitten über die Arbeitsfläche hinaus verlängert und enden in Anschlußpunkten (33 bzw. 34). Diese Anschlußpunkte liegen in Öffnungen (31) der Leiterplatte (30) und sind an deren Unterseite mittels Leiterbahnabschnitten ($a_1$,) und ($x_1$,) verbunden. Diese Leiterbahnabschnitte können auf einer weiteren Leiterplatte (32) ausgebildet sein, die mit der Leiterplatte (30) verbunden wird.

Es sei erwähnt, daß der Aufbau gemäß Figur 5 auch so gewählt sein kann, daß die Platte (32) eine Leiterbahnplatte darstellt und daß das Element (30) lediglich eine nach dem Aufbringen der Leiterbahnabschnitte ($a_1$, $x_1$, usw.) auf die Leiterbahnplatte (32) aufgebrachte Folie aus Isolierstoff ist, die die Leiterbahnen ($x_1$, $a_1$ usw.) trägt.

Wie Figur 5 zeigt, verlaufen also die Leiterbahnen der Gitterwicklungen für die Fein-Messung und die Grob-Messung einer Koordinatenrichtung im Bereich der Arbeitsfläche in einer gemeinsamen Ebene und außerhalb der Arbeitsfläche sind die Leiterbahnen durch Leiterbahnabschnitte, die Leiterbahnen der jeweils anderen Gitterwicklung überkreuzen, miteinander verbunden.

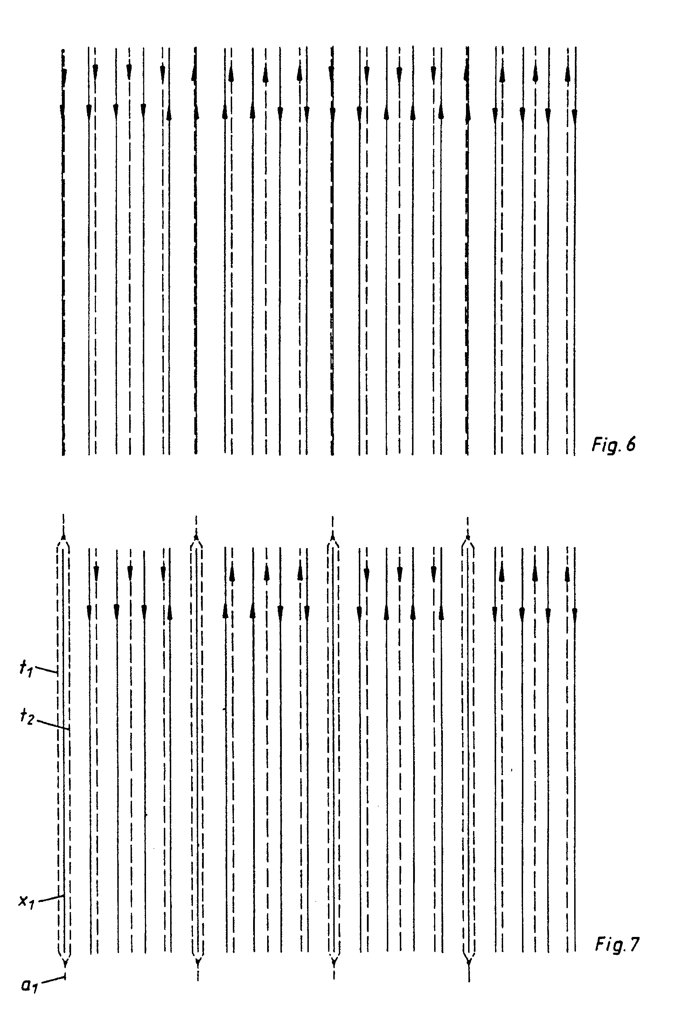

Insbesondere wenn ein Aufbau gemäß Figur 5 gewählt wird, also ein Aufbau, bei dem die Gitterwicklungen für die Fein-Messung und die Grob-Messung in einer Koordinatenrichtung in einer gemeinsamen Ebene liegen, kann es vorkommen, daß gemäß der vorgeschriebenen Verteilung Leiterbahnen für die Fein-Messung und für die Grob-Messung an der gleichen Stelle liegen. Eine derartige Verteilung ist in Figur 6 angedeutet, die einer Teildarstellung aus Figur 3 entspricht, wobei die Verbindungen der zugehörigen, parallel zueinander verlaufenden Leiterbahnabschnitte nicht gezeigt ist. Man erkennt, daß einige der ausgezogen gezeigten Leiterbahnen der Gitterwicklung für die Fein-Messung praktisch an der gleichen Stelle liegen wie einige der gestrichelt gezeichneten Leiterbahnen der Gitterwicklung für die Grob-Messung.

An sich wäre es in einem solchen Fall möglich, die Leiterbahnen für die Grob-Messung etwas seitlich zu verlagern, wodurch sich zwar eine gewisse Ungenauigkeit in der Grob-Messung ergibt, jedoch im allgemeinen noch eine Identifizierung der Grob-Lage der abgetasteten Stelle des Digitalisiertabletts möglich ist.

Die Genauigkeit der Grob-Messung läßt sich jedoch dann vollständig aufrechterhalten, wenn eine Anordnung gemäß Figur 7 gewählt wird, bei der die im Bereich einer ausgezogen gezeigten Leiterbahn der Gitterwicklung für die Fein-Messung liegende Leiterbahn der Gitterwicklung für die Grob-Messung in zwei Teil-Leiterbahnen aufgeteilt ist, die zu beiden Seiten der Leiterbahn der Gitterwicklung für die Fein-Messung liegen. Dieser Aufbau ist in Figur 7 beispielsweise für die Leiterbahn ($a_1$) angedeutet, die an sich an der gleichen Stelle wie die Leiterbahn ($x_1$) liegen würde. Die Leiterbahn ($a_1$) ist jedoch in Detailleiterbahnen ($t_1$ und $t_2$) aufgeteilt, die an unterschiedlichen Seiten, jedoch jeweils im gleichen Abstand von der Leiterbahn ($x_1$) liegen. Auf diese Weise ergibt sich eine räumliche Trennung der beiden Leiterbahnen ($a_1$ und $x_1$), jedoch erzeugt der durch die Leiterbahn ($a_1$) bzw. durch ihre Teilleiterbahnen ($t_1$ und $t_2$) fließende Strom ein Magnetfeld, das identisch dem Magnetfeld ist, das von der unaufgeteilten an der Stelle der Leiterbahn ($a_1$) liegende Leiterbahn ($x_1$) erzeugt werden würde.

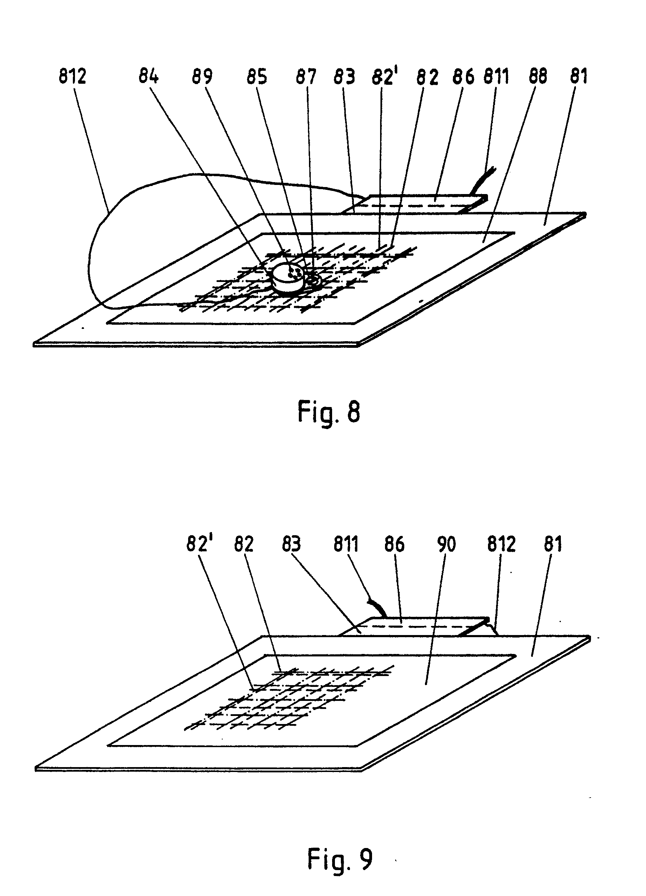

Figur 8 zeigt ein Digitalisiertablett als besondere Ausführungsform, welches in Sandwich-Bauweise aus Kunststoff hergestellt ist, wobei die Vorderseite nach oben gerichtet ist. Das Digitalisiertablett (81) weist zwei Gitternetze (82 und 82') von sich in X- und Y-Richtung überkreuzenden Leiterbahnen auf. Die Leiterbahnen verlaufen jeweils in X- bzw. Y-Richtung parallel zueinander und sind in nicht dargestellter, jedoch an sich bekannter Weise, beispielsweise gemäß US-PS 4054746 an eine Spannungsversogungs- und Steuerschaltung (83) angeschlossen. Die Spannungsversorgungs- und Steuerschaltung (83) ist nicht Gegenstand dieser Patentanmeldung und wird daher nicht näher erläutert. Hinsichtlich ihrer Einzelheiten wird auf die zuvor genannte Druckschrift verwiesen. Die Spannungsversorgungs- und Steuerschaltung (83) ist in dem dargestellten Ausführungsbeispiel in einem Gehäuse untergebracht, das außerdem eine Auswertungsschaltng (86) enthält, welche über ein Kabel (812) mit einer ebenfalls an sich bekannten Abtastspule (84) verbunden ist. Die Antastspule (84) besitzt in einem Fenster (85) ein Fadenkreuz (87), welches über dem jeweils zu digitalisierenden Ort in Stellung gebracht wird. Eine Anzahl von Steuertastern (89) dient dazu, entweder bei positioniertem Fadenkreuz (87) die Koordinaten des darunterliegenden Punktes des Digitalisiertabletts (81) in die Auswertungsschaltung (86) einzulesen oder um andere bei der Digitalisierung übliche Vorgänge wie Löschen vorheriger Informationen, Anzeigen bestimmter Zustände etc. zu bewirken. Die Spannungsversorgungs- und Steuerschaltung (83) sowie die Auswertungsschaltung (86) sind im übrigen über ein lediglich schematisch angedeutetes Anschlußkabel (811) mit einem nicht dargestellten Computer verbindbar. Das Anschlußkabel (811) ist ein mehradriges Kabel, welches einerseits zur Spannungsversorgung der Schaltungen (83 und 86) und andererseits zur Datenübertragung zwischen dem Computer und dem Steuer- und Auswerteschaltungen (83 und 86) dient.

Figur 8 zeigt außerdem, daß die Vorderseite des Digitalisiertabletts (81) als erstes Feld (88) definiert ist, welches ausschließlich zur Digitalisierung dient.

Figur 9 zeigt die Rückseite des Digitalisiertabletts (81), wobei gleiche Teile mit gleichem Bezugszeichen versehen sind. Die Rückseite des Digitalisiertabletts (81) weist ein zweites Feld (90), welches gemäß Erfindung ein anderes Menü als das erste Feld (88) auf der Vorderseite enthält. Das im zweiten Feld (90) definierte Menü ist in der Auswertungsschaltung (86) festgelegt, die aufgrund der Phasenverschiebung der in den Leiterbahnen laufenden Impulse eindeutig unterscheiden kann, ob die Abtastspule (84) auf der Vorderseite und damit auf dem ersten Feld (88) oder auf der Rückseite und damit auf dem zweiten Feld (90) liegt. Auf diese Weise ist es möglich, für die Vorderseite und die Rückseite des Digitalisiertabletts (81) unterschiedliche Menüs zu definieren, wobei beispielsweise das auf der Rückseite im zweiten Feld (90) definierte Menü vorteilhafterweise Ausfallfelder für das Einstellen der Datenübertragungsrate, für die Zahl der zur Zeichendarstellung verwendeten Bits, für die Lage des Nullpunktes sowie für die Einstellung der Anpassungsschalter an die Computerschnittstelle aufweist. Es wird darauf hingewiesen, daß das Rückseitenmenü natürlich auch andere und/oder zusätzliche Funktionen aufweisen kann.

## Patentansprüche

1.  Digitalisiertablett (1) mit einer ersten, sich in einer Ebene parallel zur Arbeitsfläche erstreckenden Gitterwicklung (X), die in sich regelmäßig wiederholende Leiterbahngruppen unterteilt ist, in denen Leiterbahnen (X1, X2, X3, X4), die sich senkrecht zu einer ersten Koordinatenachse erstrecken, jeweils mit vorgegebenem Abstand parallel zueinander verlaufen, mit einer sich in einer Ebene parallel zur Arbeitsfläche erstreckenden der ersten Gitterwicklung (X) eng benachbarten zweiten Gitterwicklung (Y), die in sich regelmäßig wiederholende Leiterbahngruppen unterteilt ist, in denen Leiterbahnen, die sich senkrecht zu einer zweiten Koordinatenaches erstrecken, jeweils mit vorgegebenem Abstand parallel zueinander verlaufen, sowie mit dritten und vierten Gitterwicklungen (A; B) mit jeweils in vorgegebenem Abstand parallel zueinander verlaufenden Leiterbahnen (a1, a2, a3, a4; b1, b2, b3, b4), von denen die dritte Gitterwicklung (A) parallel zur ersten Gitterwicklung (X) und die vierte Gitterwicklung (B) parallel zur zweiten Gitterwicklung (Y) angeordnet ist, wobei alle Gitterwicklungen (X; Y; A; B) in parallelen Ebenen zueinander liegen, **dadurch gekennzeichnet** , daß die dritten und vierten Gitterwicklungen (A; B) jeweils in Leiterbahngruppen unterteilt sind, die jeweils eine den Leiterbahngruppen der ersten und zweiten Gitterwicklungen analoge Struktur aufweisen und daß die Breiten der Leiterbahngruppen der ersten und der dritten Gitterwicklungen (X; A) sowie die Breiten der Leiterbahngruppen der zweiten und der vierten Gitterwicklungen (Y; B) sich jeweils derart voneinander unterscheiden, daß die ersten Leiterbahnen der benachbarten Leiterbahngruppen der beiden parallel zueinander angeordneten Gitterwicklungen (X; A; Y; B) in Richtung der zugehörigen Koordinatenachse über die gesamte Arbeitsfläche unterschiedliche Abstände voneinander haben.

2.  Digitalisiertablett nach Anspruch 1 dadurch gekennzeichnet, daß die Breite aller Leiterbahngruppen einer Gitterwicklung (X, A) im wesentlichen gleich ist.

3. Digitalisiertablett nach Anspruch 2 dadurch gekennzeichnet, daß die erste Gitterwicklung (X) über die gesamte Arbeitsfläche n, die zweite Gitterwicklung (Y) über die gesamte Arbeitsfläche m, die dritte Gitterwicklung (A) über die gesamte Arbeitsfläche (n - r) und die vierte Gitterwicklung (B) über die gesamte Arbeitsfläche (m - q) Leiterbahngruppen aufweisen, wobei n und m Zahlen größer 1 vorzugsweise ganze Zahlen sind und r und q kleiner oder gleich 1 sind.

4. Digitalisiertablett nach Anspruch 3 dadurch gekennzeichnet, daß der Abstand der Anfänge der Leiterbahngruppen der ersten und der dritten Gitterwicklungen (X, A) sowie der zweiten und der vierten Gitterwicklungen (Y, B) an einem Ende der Arbeitsfläche gleich Null ist.

5. Digitalisiertablett nach einem der Ansprüche 1 - 4 dadurch gekennzeichnet, daß die Anschlüsse aller Gitterwicklungen (X, Y, A, B) benachbart zueinander in einem Randbereich des Digitalisiertabletts (1) ausgebildet sind.

6. Digitalisiertablett nach einem der Ansprüche 1 - 5 dadurch gekennzeichnet, daß die erste und die dritte Gitterwicklung (X', A') sowie die zweite und die vierte Gitterwicklung (Y', B') im Bereich der Arbeitsfläche jeweils in einer gemeinsamen Ebene liegen.

7. Digitalisiertablett nach Anspruch 6 dadurch gekennzeichnet, daß zumindest eine Leiterbahn der dritten Gitterwicklung (A') und/oder der vierten Gitterwicklung (B') in zwei Parallel-Teil-Leiterbahnen ($t_1$, $t_2$) unterteilt ist, die zu beiden Seiten einer Leiterbahn ($x_1$) der ersten Gitterwicklung (X') oder der zweiten Gitterwicklung (Y') verlaufen.

8. Digitalisiertablett nach einem der Ansprüche 1 - 7, dadurch gekennzeichnet, daß ein erstes Arbeitsfeld (88) auf der Vorderseite des Digitalisiertabletts (81) und ein zweites Arbeitsfeld (90) auf dessen Rückseite definiert ist und däß eine Auswertungsschaltung (86) aufgrund der Phasenverschiebung der in den Leiterbahnen laufenden Impulse zu entscheiden vermag, ob eine Abtastspule (84) über dem ersten Arbeitsfeld (88) bzw. der Vorderseite oder über dem zweiten Arbeitsfeld (90) bzw. der Rückseite des Digitalisiertabletts (81) liegt.

9. Digitalisiertablett nach Anspruch 8 dadurch gekennzeichnet, däß die beiden Felder (88,90) in Fächer unterteilt sind, denen die Auswertungsschaltung (86) bestimmte Funktionen zuordnet, so daß jedes Feld (88, 90) ein bestimmtes Menü darstellt.

10. Digitalisiertablett nach einem der Ansprüche 8 oder 9 dadurch gekennzeichnet, daß auf seiner Vorder- und Rückseite unterschiedliche Menüs definiert sind.

11. Digitalisiertablett nach einem der Ansprüche 8 - 10 dadurch gekennzeichnet, daß das erste Feld (88) zur Vornahme von Digitalisierungsmessungen dient.

12. Digitalisiertablett nach einem der Ansprüche 8 - 10 dadurch gekennzeichnet, daß das zweite Feld (90) als festes Menü für lokale Kommunikation mit einem in der Spannungsversorgung- und Steuerschaltung (83) enthaltenen Prozessor definiert ist.

13. Digitalisiertablett nach Anspruch 12 dadurch gekennzeichnet, daß sich die Abstände der Leiterbahnen in dem durch die ersten und zweiten Gitterwicklungen definierten X-, Y-Gitternetz (82) von denen in dem durch die dritten und viesten Gitterwicklungen definierten A-, B-Gitternetz (82') unterscheiden.

14. Verfahren zur Ansteuerung eines Digitalisiertabletts gemäß einem der Ansprüche 1 - bei dem die ersten und zweiten Gitterwicklungen mit periodischen elektrischen Signalen angesteuert werden, die in vorgegebenem Abstand zeitlich gegeneinander versetzt sind, dadurch gekennzeichnet, daß die dritte und die vierte Gitterwicklung mit im vorgegebenem Abstand zeitlich zueinander sowie im vorgegebenem Abstand zeitlich zu den Signalen für die ersten und zweiten Gitterwicklungen versetzten Signale angesteuert werden.

**Claims**

1. A digitising tablet (1) with a first grid coil (X) extending in a plane parallel to the working surface and which is divided into regularly recurrent conductor path groups, in which conductor paths (X1, X2, X3, X4), which extend vertically to a first coordinate axis, in each case run at a given distance parallel to each other, with a second grid coil (Y) extending in a plane parallel to the working surface and closely adjacent to the first grid coil (X), which is divided into regularly recurrent conductor path groups, in which conductor paths, which extend vertically to a second coordinate axis, in each case run at a given distance parallel to each other, and also with third and fourth grid coils (A;B) with conductor paths (a1, a2, a3, 14; b1, b2, b3, b4) in each case running at a given distance parallel to each other, the third grid coil (A) of which is arranged parallel to the first grid coil (X) and the fourth grid coil (B) is arranged parallel to the second grid coil (Y), in which all grid coils (X; Y; A; B) lie in planes parallel to each other, characterised in that the third and fourth grid coils (A;B) in each case are divided into conductor path groups which in each case have a structure analogous to the conductor path groups of the first and second gird coils, and that the widths of the conductor path groups of the first and third grid coils (X;A) and also the widths of the conductor path groups of the second and the fourth grid coils (Y;B) in each case differ from each other such that the first conductor paths of the adjacent conductor path groups of the two grid coils (X; A; Y; B) arranged parallel to each other have different distances from each other in the direction of the associated coordinate axis over the entire working surface.

2. A digitising tablet according to Claim 1, characterised in that the width of all conductor path groups of a grid coil (X,A) is substantially identical.

3. A digitising tablet according to Claim 2, characterised in that the first grid coil (X) over the entire working surface n, the second grid coil (Y) over the entire working surface m, the third grid coil (A) over the entire working surface(n - r) and the fourth grid coil (B) over the entire working surface (m - q) have conductor path groups, in which n and m are numbers greater than 1, preferably whole numbers, and r and q are smaller than, or equal to, 1.

4. A digitising tablet according to Claim 3, characterised in that the distance of the beginnings of the conductor path groups of the first and the third grid coils (X, A) and also of the second and the fourth grid coils (Y,B) at one end of the working surface is equal to zero.

5. A digitising tablet according to one of Claims 1 - 4, characterised in that the connections of all grid coils (X, Y, A, B) are constructed adjacent to each other in a marginal region of the digitising tablet (1).

6. A digitising tablet according to one of Claims 1 - 5, characterised in that the first and the third grid coil (X', A') and also the second and the fourth grid coil (Y', B' ) lie in the region of the working surface in each case in a common plane.

7. A digitising tablet according to Claim 6, characterised in that at least one conductor path of the third grid coil (A') and/or of the fourth grid coil (B') is divided into two parallel partial conductor paths ($t_1$, $t_2$), which run on both sides of a conductor path ($x_1$) of the first grid coil (X' ) or of the second grid coil (Y').

8. A digitising tablet according to one of Claims 1 - 7, characterised in that a first working field (88) is defined on the front side of the digitising tablet (81) and a second working field (90) is defined on its reverse side, and that an evaluation circuit (86), owing to the phase shift of the pulses running in the conductor paths, is able to decide whether a scanning coil (84) lies over the first working field (88) or respectively the front side or over the second working field (90) or respectively the reverse side of the digitising tablet (81).

9. A digitising tablet according to Claim 8, characterised in that the two fields (88,90) are divided into compartments to which the evaluation circuit (86) assigns particular functions, so that each field (88,90) represents a particular menu.

10. A digitising tablet according to one of Claims 8 or 9, characterised in that different menus are defined on its front and reverse sides.

11. A digitising tablet according to one of Claims 8 - 10, characterised in that the first field (88) serves for the undertaking of digitising measurements.

12. A digitising tablet according to one of Claims 8 - 10, characterised in that the second field (90) is defined as a fixed menu for local communication with a processor contained in the voltage supply- and control circuit (83).

13. A digitising tablet according to Claim 12, characterised in that the distances of the conductor paths in the X-, Y-grid network (82) defined by the first and second grid coils differ from those in the A-, B-grid network (82') defined by the third and fourth grid coils.

14. A method for the control of a digitising tablet according to one of Claims 1 - 13, in which the first and second grid coils are controlled with periodic electrical signals, which are staggered chronologically with respect to each other with a given spacing, characterised in that the third and the fourth grid coils are controlled with signals staggered with the given spacing chronologically with respect to each other and also with the given spacing chronologically to the signals for the first and second grid coils.

## Revendications

1. Tablette à digitaliser (1) avec un premier enroulement de grille (X) s'étendant dans un plan parallèle à la surface de travail, divisé en groupes de conducteurs régulièrement répétitifs dans lesquels des conducteurs (X1, X2, X3, X4) disposés de façon parallèle perpendiculairement à un premier axe de coordonnées et chaque fois avec un écart prédéterminé, un deuxième enroulement de grille (Y), très voisin du premier enroulement de grille (X) s'étendant dans un plan parallèle à la surface de travail, divisé en groupes de conducteurs régulièrement répétitifs disposés de façon parallèle perpendiculairement à un deuxième axe de coordonnées et chaque fois avec un écart prédéterminé, ainsi qu'un troisième et quatrième enroulement de grille (A; B) avec des conducteurs (a1, a2, a3, a4; b1, b2, b3, b4) disposés de façon parallèle les uns aux autres avec le troisième enroulement de grille (A) parallèle au premier (X) et le quatrième enroulement de grille (B) parallèle au deuxième (Y) et tous les enroulements de grille (X; Y; A; B) situés dans des plans parallèles l'un par rapport à l'autre, caractérisée en ce que les troisième et quatrième enroulement de grille (A; B) sont tous deux divisés en groupes de conducteurs de structure analogue à celle des groupes de conducteurs du premier et du deuxième enroulement de grille, et que les largeurs des groupes de conducteurs du premier et du troisième enroulement de grille (X; A) ainsi que les largeurs des groupes de conducteurs du deuxième et du quatrième enroulement de grille (Y; B) diffèrent de façon telle que les premiers conducteurs du groupe de conducteurs voisin des deux enroulements de grille parallèles entre eux (X; A/Y; B) dans la direction de l'axe de coordonnées correspondant possèdent des écarts différents sur l'ensemble de la surface de travail.

2. Tablette à digitaliser conforme à la revendication 1, caractérisée en ce que la largeur de tous les groupes de conducteurs d'un enroulement de grille (X, A) est fondamentalement identique.

3. Tablette à digitaliser conforme à la revendication 2, caractérisée en ce que le premier enroulement de grille (X) s'étend sur l'ensemble de la surface de travail n, le deuxième enroulement de grille (Y) sur l'ensemble de la surface de travail m, le troisième enroulement de grille (A) sur l'ensemble de la surface de travail (n-r) et le quatrième enroulement de grille (B) sur l'ensemble de la surface de travail (m-q), m et n étant des nombres supérieurs à 1 de préférence entiers, et q et r inférieurs ou égaux à 1.

4. Tablette à digitaliser conforme à la revendication 3, caractérisée en ce que l'écart entre les débuts des groupes de conducteurs du premier et du troisième enroulement de grille (X, A) ainsi que du deuxième et du quatrième enroulement de grille (Y, B) sont égaux à zéro à une extrémité de la surface de travail.

5. Tablette à digitaliser conforme à l'une des revendications 1 à 4, caractérisée en ce que les raccordements de tous les enroulements de grille (X, Y, A, B) sont placés à proximité les uns des autres en bordure de la tablette à digitaliser (1).

6. Tablette à digitaliser conforme à l'une des revendications 1 à 5, caractérisé en ce que le premier et le troisième enroulement de grille (X', A') ainsi que le deuxième et le quatrième enroulement de grille (Y', B') dans la zone de la surface de travail sont toujours situés dans un même plan.

7. Tablette à digitaliser conforme à la revendication 6, caractérisée en ce qu'au moins un conducteur du troisième enroulement de grille (A') et/ou du quatrième enroulement de grille (B') est divisé en deux conducteurs partiels parallèles ($t_1$, $t_2$), disposés des deux côtés d'un conducteur ($x_1$) du premier enroulement de grille (X') ou du deuxième enroulement de grille (Y').

8. Tablette à digitaliser conforme à l'une des revendications 1 à 7, caractérisée en ce qu'il est défini un premier domaine de travail (88) sur la partie antérieure de la tablette à digitaliser (81) et un deuxième domaine de travail (90) sur la partie postérieure et qu'un circuit d'exploitation (86) permet, à partir du déphasage des impulsions passant dans les conducteurs, de décider si une bobine d'exploration (84) se trouve au-dessus du premier domaine de travail (88) (donc partie antérieure) ou au-dessus du deuxième domaine de travail (90) (donc partie postérieure).

9. Tablette à digitaliser conforme à la revendication 8, caractérisée en ce que les deux domaines (88, 90) sont divisés en secteurs, à qui le circuit d'exploitation (86) affecte des fonctions déterminées, de telle sorte que chaque domaine (88, 90) présente un menu déterminé.

10. Tablette à digitaliser conforme à l'une des revendications 8 ou 9, caractérisée en ce que des menus différents sont définis sur la partie antérieure et sur la partie postérieure.

11. Tablette à digitaliser conforme à l'une des revendications 8 à 10, caractérisée en ce que le premier domaine (88) sert à l'exécution des mesures de digitalisation.

12. Tablette à digitaliser conforme à l'une des revendications 8 à 10, caractérisée en ce que le deuxième domaine (90) est défini comme menu fixe pour la communication locale avec processeur contenu dans le circuit d'alimentation et de commande (83).

13. Tablette à digitaliser conforme à la revendication 12, caractérisée en ce que, entre les conducteurs dans les réseaux de grille X, Y (82) définis par les premier et troisième enroulement de grille diffèrent de ceux dans les réseaux de grille A, B (82') définis dans les troisième et quatrième enroulement de grille.

14. Procédé pour la commande d'une tablette à digitaliser conforme à l'une des revendications 1 à 13, pour la commande du premier et deuxième enroulement de grille par des signaux électriques périodiques, déphasés dans le temps d'une quantité prédéterminée, caractérisé en ce que le troisième et le quatrième enroulement de grille sont commandés par des signaux déphasés entre eux ainsi que vis à vis de ceux qui commandent le premier et le deuxième enroulement de grille.

Fig.1

Fig. 2

X-Achse

Y-Achse

EP 0 228 579 B1

14

Fig. 3

Fig.4

Fig. 5

*Fig. 6*

$t_1$

$t_2$

$x_1$

$a_1$

*Fig. 7*

812  84  89  85  87  83  82'  82  86  811  88  81

Fig. 8

82'  82  83  811  86  90  812  81

Fig. 9